# EUROPEAN PATENT SPECIFICATION

(11) **EP 2 494 680 B1**
(45) Date of publication and mention of the grant of the patent: **20.12.2017**
(21) Application number: 10765747.0
(22) Date of filing: 01.09.2010
(51) Int. Cl.: H02K 11/33, B60S 1/16, H02K 7/116, H02K 5/22

(54) **ELECTROMOTIVE AUXILIARY DRIVE**
ELEKTROMOTORISCHER HILFSANTRIEB
ENTRAÎNEMENT AUXILIAIRE PAR MOTEUR ÉLECTRIQUE

(30) Priority: 28.09.2009 DE 102009043322
(43) Date of publication of application: 05.09.2012
(73) Proprietor: Valeo Systèmes d'Essuyage, 78322 Le Mesnil Saint Denis (FR)
(72) Inventor: STEFANI, Siegfried, 71739 Oberriexingen (DE)
(74) Representative: Callu Danseux, Violaine
(86) International application number: PCT/EP2010/005356
(87) International publication number: WO 2011/035846

(56) References cited:
- EP-A1- 1 696 536
- WO-A1-2007/012925
- DE-A1- 10 318 729
- DE-A1- 10 348 979
- DE-A1-102005 038 050
- FR-A1- 2 593 017
- FR-A1- 2 821 497
- JP-A- 2008 206 373
- US-A- 5 705 755
- US-A1- 2003 137 202

## Description

The invention refers to an electromotive auxiliary drive for vehicles, primarily to an electromotive windscreen wiper drive or wiper motor according to the generic term of patent claim 1.

Electromotive auxiliary drives for use in vehicles, notably for door panel controller as in German publications DE10318729 and US patent US5705755A, also particularly in their design as a windscreen wiper drive or wiper motor, as described in patent applications FR2821497A1 and DE102005038050, or however in their design as a servomotor, are known in various different embodiments and are generally executed as a geared motor consisting of the actual electric motor and a flange-mounted gear. It is also known and usual, as in DE10348979, to provide electronics essentially consisting of a circuit board or PCB and of corresponding electrical components inside a housing, which serve for activation of the electric motor. The PCB is fixed in this case to a housing section of the gear housing, generally to the inside of the housing cover of the gear housing and to be more precise, using for example locking pins acting as spacers between the internal surface of the housing cover and the PCB and reaching through corresponding openings in the PCB. The PCB is fixed by staking of the locking pins or however by catch elements provided in addition to the locking pins on the housing section or housing cover.

During assembly of the electronics and the PCB, it is generally necessary to establish an electrical connection between contact or connecting elements provided on the PCB on the PCB side and connecting elements provided on the housing section or housing cover on the housing side. This electrical connection is made after joining together the connecting elements on the PCB side and housing side by soldering or welding (e.g. laser welding) for example and/or however by plug and socket-like joining or mating of the electrical connecting elements.

The purpose of the invention is to demonstrate an electromotive auxiliary drive characterised by an improved and simplified assembly of the electronics and the at least one PCB of such electronics. In order to solve this problem, an electromotive auxiliary drive according to patent claim 1 is developed.

A particularity of the invention lies in the fact that with the aid of the centring and locking pins, preliminary centring of the PCB in relation to the housing section and therefore also the electrical contact and connecting elements on the PCB side in relation to the electrical contact and connecting elements on the housing side is initially performed before actual connection of the PCB to the corresponding housing section, preferably to the housing cover. It is only on further insertion of the centring and locking pins into the corresponding centring and locking openings that engagement of the PCB on the housing section and final mating of the connecting elements on the PCB side and housing side occurs.

All the functions such as centring, joining assistance and final fixing by locking are incorporated in the centring and locking pins, which also primarily serve in the invention as spacers separating the PCB from surfaces of the housing section and the housing cover. The design according to the invention renders simple assembly of the respective PCB possible.

The preliminary centring ensures that on final engagement of the PCB, the electrical connecting elements on the PCB side and housing side are united in the required manner properly and without damage and to be more precise, for establishment of an electrical socket-plug connection for example or however such that following engagement of the PCB, soldering or welding of the connecting elements can be performed. The preliminary centring rules out manufacturing defects during bonding of the PCB. Furthermore, stresses acting mechanically on the connecting elements are avoided by the design according to the invention.

The preliminary centring is realised by the position and shape of the centring and locking pins, which with their centring sections tapering towards the free pin end, in a conical shape for example, receive and initially centre the respective PCB on the centring and locking openings during assembly, before the contact or connecting elements on the PCB side and cover side engage in one another. From this positioning achieved by this preliminary centring, further mating of the electrical connecting elements is performed until final engagement of the PCB, which is subsequently safely and permanently held on the housing section involved as a result of this engagement.

Further developments, advantages and application possibilities of the invention are also apparent from the following description of examples of embodiment and from the figures. In this case, all the characteristics described and/or illustrated are in themselves or in any desired combination fundamentally a subject of the invention, regardless of their summary in the claims or their backward relation. The contents of the claims are also made an integral part of the description.

The invention is described below in further detail in examples of embodiment based on the figures:
Fig. 1 shows a perspective representation of an electromotive auxiliary drive for use in vehicles in the form of a windscreen wiper drive, wherein the gear housing, gear housing cover and electronics included in the gear housing are reproduced in a perspective exploded view;

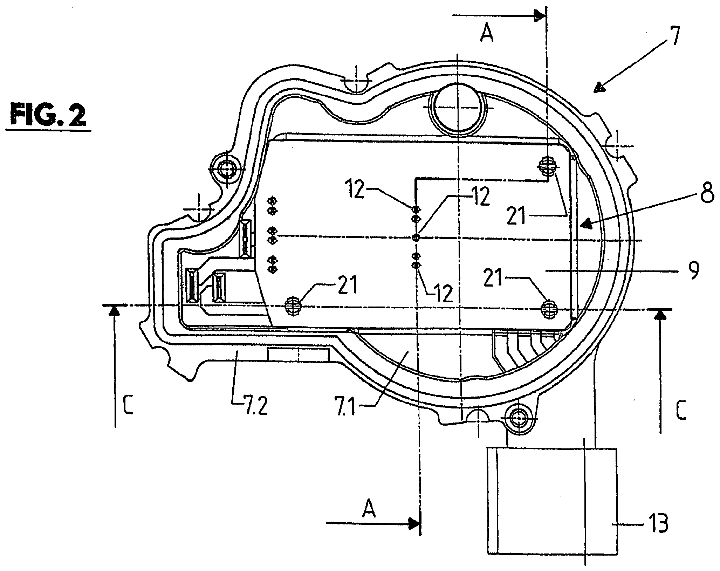

Fig. 2 shows a top view of the inside of the housing cover and the PCB of the electronics maintained centred at this position;

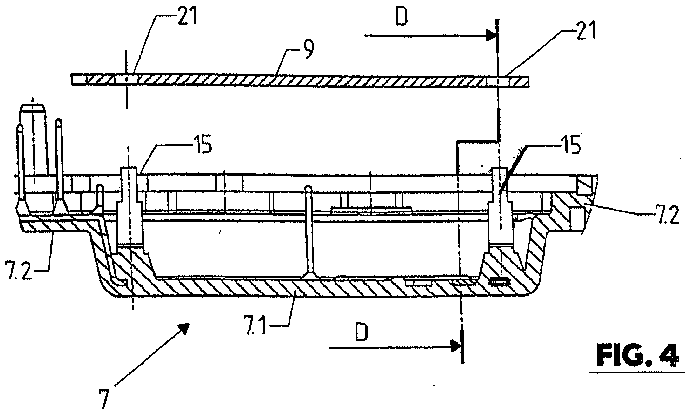

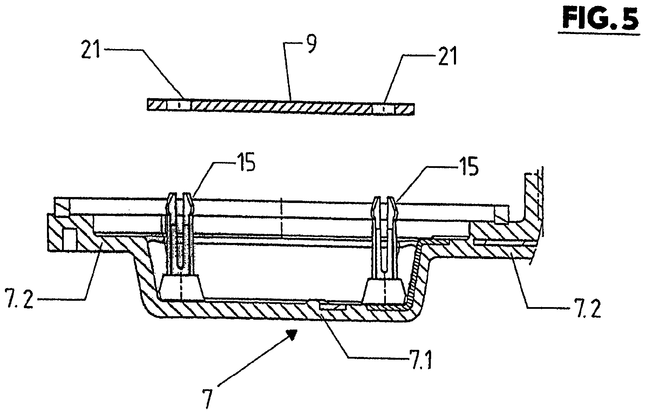

Fig. 3-5 shows sections along the lines A - A (figure 3), C - C (figure 4) and D - D of figures 2 and 4;
Fig. 6 and 7 show one of the centring and locking pins in an individual view and in two lateral views rotated through 90°.

In the figures, 1 is an electromotive auxiliary drive for vehicles in the form of a windscreen wiper drive or wiper motor. Drive 1 essentially consists in the intrinsically known manner of the electric motor 2 with the motor housing 3 and of a gear 4, designed as a worm gear in the embodiment represented, the gear housing 5 of which is flange-mounted on the motor housing 3. The gear housing 5 dish-like or bowl-like in execution and to be more precise, designed among other aspects to receive a gearwheel or worm wheel 6 connected to the output shaft of the electromotive auxiliary drive 1, which (gearwheel or worm wheel) in turn interacts with a worm formed on a motor shaft, not represented, of the electric motor 2.

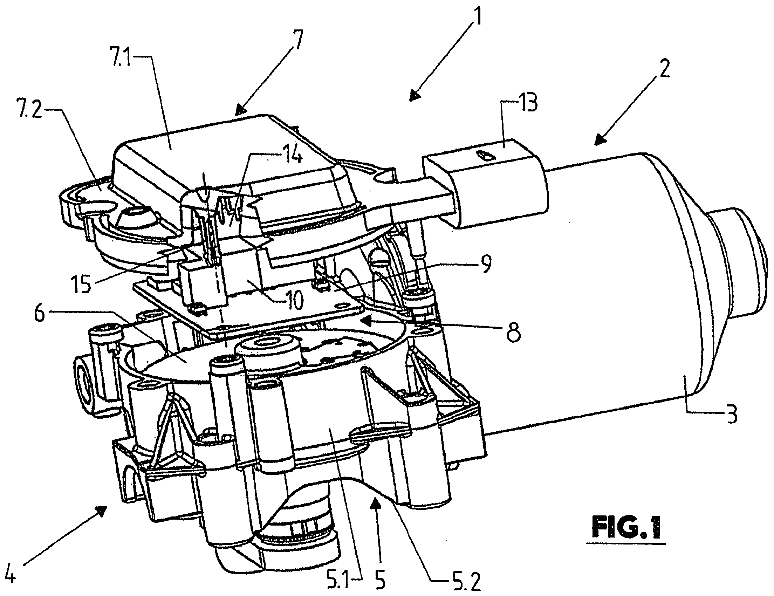

The gear housing 5 is formed for example in one piece from a suitable material, e.g. metallic material with a closed circumferential wall 5.1 and a closed base 5.2. On its upper side open in the representation in figure 1, the gear housing 5 is hermetically closed by a cover 7 in the completely assembled auxiliary drive 1.

The cover 7, which is manufactured for example in one piece as a moulding from a suitable material or a suitable material component, preferably from a material of adequate inherent elasticity, e.g. plastic, is executed in the embodiment presented such that it forms approximately in the centre of the cover a cover area projecting in the manner of a spike over the outside of the cover and therefore a correspondingly depressed cover area 7.1 on the inside of the cover and surrounding the latter area, forms a flange-like cover periphery 7.2, with which the cover 7, with the auxiliary drive assembled, is sealed in contact with the circumferential wall 5.1 and is connected to the gear housing 5. Electronics are provided on the inside of the housing cover 7, which serve in particular for control of the electric motor 2, for example for controlled deactivation of the electric motor 2 in one or several predetermined end or parked positions, for control or regulation of motor speed and for control and modification of the direction of rotation of the motor etc.

The electronics 8 comprise among other elements a circuit board or PCB 9 equipped with corresponding electronic components. By means of electrical contacts or connecting elements 11a and 11b on the housing side, which form an integral part of electrical conductors provided on the inside of the housing cover 7 and the cover area 7.1, the electronics 8 and contacts or connecting elements 12 at this position are connected to the electric contacts of an electrical connection 13 designed as a multiple socket or multiple plug, by means of which the auxiliary drive 1 is connectable to electrical supply and control leads on the vehicle side.

The electronics 8 are fixed to the inside of the cover 7 in such a manner that the PCB 9 is arranged with its surface sides parallel or approximately parallel to the base of the cover area 7.1 and at an interval from this base, so that the components 10 are accommodated in the cover interior 14 formed by the spike-like cover area 7.1. The connections between the connections on the cover side 11a and 11b and the connections on the PCB side 12 are soldered or welded connections, or however inserted, i.e. plug-like and socket-like connections.

In the embodiment presented, three centring and locking pins 15 spatially offset in relation to one another are provided on the inside of the cover 7 for centring and retaining of the PCB 9 and indeed in such a manner that these pins, with their longitudinal axes respectively oriented parallel to one another, protrude vertically from the internal surface of the base of the cover area 7.1. In the embodiment presented, the centring and locking pins are executed identically in each case and are manufactured in one piece with the housing cover 7.

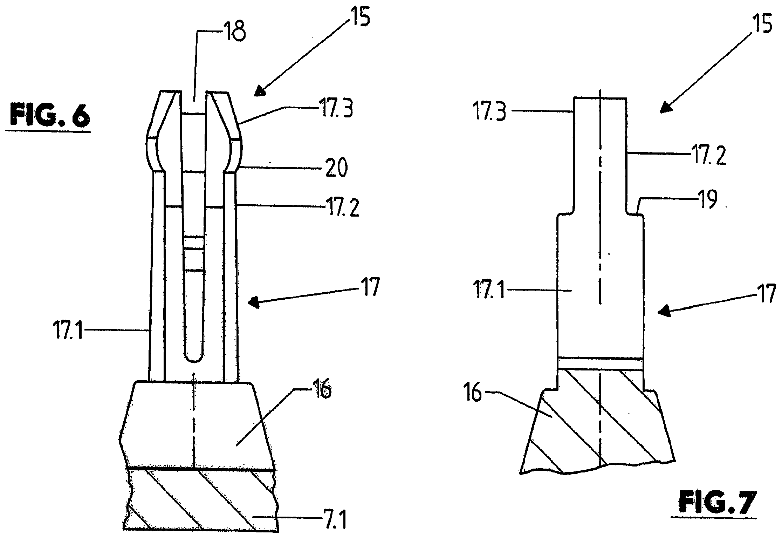

Figures 6 and 7 illustrate one of the centring and locking pins 5 in detail. Starting from the wall of the housing cover 7, the centring and locking pin 15 initially forms a cone-like base 16, which subsequently becomes a pin-like section 17, which is continuously axially slotted over its entire length, i.e. presents the slot 18, which is also open on the free end of the locking pin 15 distant from the base 16. The pin-like section 17, which acts as a catch pin or clip and is designed in the embodiment presented mirror-symmetrically to a central plane of the elongated slot 18 surrounding the pin axis, is in turn formed in one piece with several subsections 17.1 - 17.3 adjacent to each other in the direction of the pin axis and to be more precise
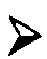 with the subsection 17.1 adjacent to the base 16,
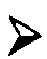 with the subsection 17.2 following the subsection 17.1 and
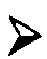 with the subsection 17.3 following the subsection 17.2, which forms the centring section of the respective centring and locking pin 15.

In the embodiment presented, the subjection 17.1 presents a cylindrical or roughly cylindrical cross section and subsection 17.2 presents an approximately rectangular cross-section with two convexly curved circumferential sides merging unbrokenly into the external or lateral surface of the subsection 17.1 and with two parallel flat circumferential sides spaced at an interval from each other on which the elongated slot 18 is also open and which continue on the subsection 17.3 to the free end of the pin. The roughly rectangular cross-section of the subsection 17.3 initially increases in the cross-sectional axis parallel to the flat circumferential sides and on the two other circumferential sides convexly curved in relation to the pin axis starting from the subsection 17.2 and subsequently decreases towards the free end of the pin.

Two PCB contact surfaces 19 are formed at the transition between the subsections 17.1 and 17.2 and at the transition between the subsections 17.2 and 17.3 on the convexly curved circumferential sides of these subsections merging at this point, two undercuts 20 acting as catches.

Openings 21 are provided in the PCB 9 for the centring and locking pins 15, the cross-section of which is adapted in shape and size to the external cross-section of subsections 17.2 and 17.3 of the centring and locking pins 15 in such a way that when applying and pressing on the PCB onto the centring and locking pins 15 inserted into the openings 21 with the subsections 17.3, initially on the subsections 17.3, preliminary centring of the PCB 9 in relation to the housing cover 7 and therefore preliminary centring of the connecting elements 12 on the PCB side in relation to the connecting elements 11a and 11b and with further pushing on of the PCB 9 onto the locking pins 15, engagement of the PCB 9 on the subsections 17.2 occur, with the axial contact surfaces 19 defining the distance between the PCB 9 and the internal surface of the base of the spike-like cover area 17.1 and the undercuts 20 effecting engagement of the PCB 9 on the centring and locking pins 15.

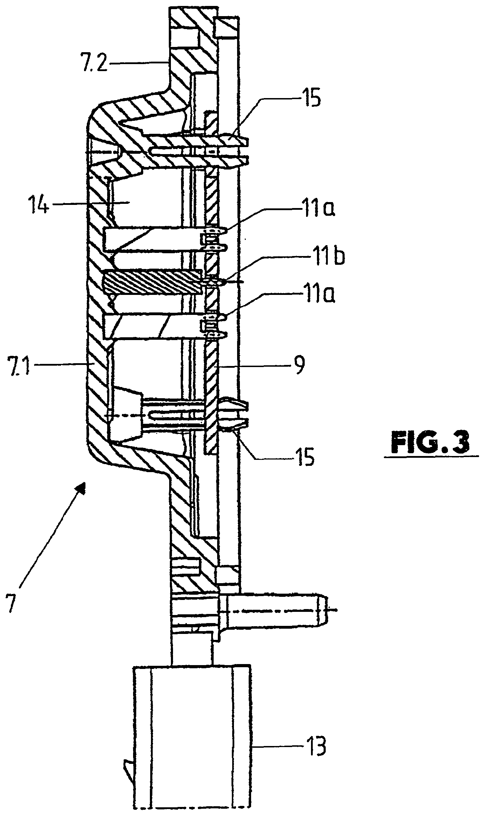

As can be gathered from figure 3 in particular, the connecting elements 11a and 11b on the cover side are of different design in the embodiment presented. Whereas the connecting elements 11a are executed in the manner of a fork at their free ends with respectively two pin-like sections reaching through the PCB, the free end of the connecting element 11b merely forms a pin-like section of reduced diameter passed through an opening in the PCB 9 in such a way that the connecting element 11b forms a further support surface for the PCB 9 on its side facing the inside of the cover 7.

In order to ensure secure joining together of the PCB-side and cover-side connecting elements 12 and 11a and 11b respectively, the arrangement is chosen such that the preliminary centring of the PCB 9 in relation to the housing cover 7 by means of the subsections 17.3 engaging in the openings 21 is already completed before final joining together or mating the connecting elements is performed.

In the embodiment presented, the centring and locking pins 15 are provided on the inside of the housing cover 7 such that these pins form the vertices of a right-angled triangle and indeed with one longer side forming the right angle and with one shorter side. The PCB 9 is oblong-shaped in a top view in the embodiment presented. The openings 21 are arranged at this position such that a connecting line runs between two openings along one longitudinal side and a connecting line runs between two openings 21 along a narrow side of the oblong-shaped PCB.

As shown by figure 3 in particular, the electrical contacts or connecting elements 12 on the PCB side are provided approximately in the centre of the PCB 9 in the embodiment presented. Accordingly, the contacts or connecting elements 11a and 11b on the cover side are arranged approximately in the centre of the dome-like cover area 7.1 and indeed in the embodiment presented, on a common line vertically or roughly vertically to the longitudinal sides of the rectangular PCB 9.

The described embodiment of the electric auxiliary drive 1 presents the advantages, among others, that on assembling the electronics 8, preliminary centring of the PCB 9 in relation to the cover 7 is performed by means of the centring and locking pins 15 such that secure joining and/or mating of the electrical connecting elements 11a, 11b and 12 is ensured without the risk of damage, for example distortion of the connecting elements 11a, 11b, that following assembly, the PCB 9 is held precisely aligned in the housing cover 7 by the centring and locking pins 15 such that mechanical stresses on the contact areas and transitions between the connecting elements 11a, 11b and 12 are safely avoided and that for centring and alignment in addition to fixing of the PCB 9 on the housing cover, solely the centring and locking pins 15 are basically required.

Owing to the shaping and the elastic properties of the centring and locking pins and the sections 17, reliable permanent securing of the PCB 9 on the housing cover 7 is guaranteed. Insofar as the final electrical connection between the connecting elements 11a, 11b and the connecting elements 12 on the PCB side is established by soldering or welding, for example laser welding, this is performed after engagement of the PCB 9 on the centring and locking pins 15.

All the functions such as centring, joining assistance and securing are incorporated in the centring and locking pins 15, thereby rendering additional means for fixing or engagement in addition to supplementary elements acting as spacers or stops for the PCB superfluous, as a result of which space is also saved, among other aspects, on the PCB and/or in the cover and the manufacturing and assembly costs are reduced.

As a result of the design of the centring and locking pins in the area of the undercuts 20 in such a manner that at this position, the external cross-section initially increases starting from the subsection 17.2 and proceeding towards the free end and by mounting the PCB 9 with the edge of the corresponding centring and locking opening 21 facing away from the contact surfaces 19 against the undercuts 20, it is also achieved that the PCB is permanently pressed against the contact surfaces 19 as a result of the elastic properties of the centring and locking pins and the wedge effect of the undercuts 20 and consequently vibration-free installation of the PCB is guaranteed.

The invention has been described above based on an example of embodiment. It is understood that many modifications and variations are possible without departing as a result from the concept on which the invention is based.

It was therefore assumed above that the centring and locking pins 15 are manufactured in one piece with the housing cover. It is also possible of course to fix the centring and locking pins 15 acting as catch pins or clips as separately manufactured elements on the inside of the housing cover 7 or however provide these during manufacture of the housing cover 7 on the latter by overmoulding, for example in an in-mould injection moulding process.

## Claims

1. A windscreen wiper drive or motor for use in vehicles, having at least one electronic system (8), accommodated inside a gear (4), having a circuit board or PCB (9), the at least one electronic system (8) being retained on the inside of a housing section which is a cover (7) of a gear housing (5) by at least one centring and locking pin (15) protruding from an internal surface of the housing section , the gear housing (5) is dish-like or bowl-like and designed to receive a worm wheel (6), **characterised in that**
the at least one electronic system (8), with the use of the at least one centring and locking pin (15) reaching through a centring and fixing opening (21) is maintained centred in the interior of the gear, the at least one centring and locking pin (15) is designed in the manner of a clip or catch pin for engagement of the PCB (9) on this pin, the respective centring and locking pin (15) being manufactured in one piece with the gear housing section, in the housing cover (7), wherein the cover (7) is manufactured in one piece as a moulding from plastic,
the at least one centring and locking pin (15) presents several subsections (17.1, 17.2, 17.3) adjacent to each other in the direction of the pin axis, with a subsection (17.1) adjacent to a base (16) of the pin (15), a subsection (17.2) following the subsection (17.1) and a subsection (17.3) following the subsection (17.2), and two undercuts (20) acting as catches, formed at the transition between the subsection (17.2) and the subsection (17.3), on the convexly curved circumferential sides of these subsections (17.2, 17.3),
- the at least one centring and locking pin (15) forms two axial contact surfaces (19) for the PCB (9) at the transition between the subsection (17.1) and the subsection (17.2).

2. Windscreen wiper drive or motor according to claim 1, **characterised in that** the pin subsection (17.3) possesses a cross-section tapering in the direction of a free end of the pin.

3. Windscreen wiper drive or motor according to claim 2, **characterised in that** the at least one centring and locking pin (15) presents an external cross-section adapted to the cross-section of the corresponding centring and locking opening (21) at least on the pin subsection (17.3) effecting centring of the PCB (9) and/or on a pin subsection (17.2) received in the centring and fixing opening (21) after engagement.

4. Windscreen wiper drive or motor according to one of the above claims, **characterised in that** the at least one centring and locking pin (15) is an axially slotted pin with at least one elongated slot (18), preferably with an open elongated slot open at the free end of the pin.

5. Windscreen wiper drive or motor according to one of the above claims, **characterised in that** at least one electrical connecting element (11a, 11b) on the housing side is provided on the housing section (7) and at least one electrical connecting element (12) on the PCB side is provided on the PCB (9) and that the at least one centring and locking pin (15) is designed with the centring section (17.2, 17.3) in such a way that on inserting the centring and locking pin (15) into the centring and locking openings (21), preliminary centring of the PCB (9) and/or the at least one connecting element (12) on the PCB side in relation to the at least one connecting element (11a, 11b) on the housing side occurs and to be more precise, before joining of the connecting elements (11a, 11b, 12) and before engagement of the centring and locking pin (15) in the centring and locking opening (21).

6. Windscreen wiper drive or motor according to one of the above claims, **characterised in that** the at least one centring and locking opening (21) is provided on the PCB (9).

7. Windscreen wiper drive or motor according to one of the above claims, **characterised by** at least three locking pins (15), preferably spatially arranged offset in relation to each other such that they form the vertices of a right-angled triangle.

8. Windscreen wiper drive or motor according to one of the above claims, **characterised in that** the cover (7) forms a depressed cover area (7.1) in its centre on the inside of the cover and a flange-like cover periphery (7.2), with which the cover (7), with the auxiliary drive assembled, is sealed in contact with a circumferential wall (5.1) of the gear housing 5.

## Patentansprüche

1. Windschutzscheibenwischerantrieb oder -motor zur Verwendung in Fahrzeugen mit mindestens einem im Inneren eines Getriebes (4) untergebrachten elektronischen System (8), das eine Leiterplatte oder eine PCB (9) aufweist, wobei das mindestens eine elektronische System (8) durch mindestens einen von einer Innenfläche des Gehäuseabschnitts wegstehenden Zentrier- und Verriegelungszapfen (15) auf der Innenseite eines Gehäuseabschnitts, der ein Deckel (7) des Getriebegehäuses (5) ist, festgehalten wird, wobei das Getriebegehäuse (5) schalen- oder napfartig ist und zur Aufnahme eines Schneckenrads (6) ausgeführt ist, **dadurch gekennzeichnet, dass**
das mindestens eine elektronische System (8) unter Verwendung des mindestens einen Zentrier- und Verriegelungszapfens (15), der sich durch eine Zentrier- und Fixieröffnung (21) erstreckt, im Inneren des Getriebes zentriert gehalten wird, der mindestens eine Zentrier- und Verriegelungszapfen (15) clip- oder rastzapfenartig zur Ineingriffnahme der PCB (9) an diesem Zapfen ausgeführt ist, wobei der jeweilige Zentrier- und Verriegelungszapfen (15) einstückig mit dem Getriebegehäuseabschnitt im Gehäusedeckel (7) hergestellt ist, wobei der Deckel (7) als ein Kunststoffformteil einstückig hergestellt ist,
der mindestens eine Zentrier- und Verriegelungszapfen (15) mehrere Teilabschnitte (17.1, 17.2, 17.3) nebeneinander in Richtung der Zapfenachse, mit einem an einer Basis (16) des Zapfens (15) angrenzenden Teilabschnitt (17.1), einem auf den Teilabschnitt (17.1) folgenden Teilabschnitt (17.2) und einem auf den Teilabschnitt (17.2) folgenden Teilabschnitt (17.3), und zwei als Rasten wirkende Hinterschnitte (20) aufweist, die am Übergang zwischen dem Teilabschnitt (17.2) und dem Teilabschnitt (17.3) an den konvex gekrümmten Umfangsseiten dieser Teilabschnitte (17.2, 17.3) ausgebildet sind,
der mindestens eine Zentrier- und Verriegelungszapfen (15) am Übergang zwischen dem Teilabschnitt (17.1) und dem Teilabschnitt (17.2) zwei axiale Kontaktflächen (19) für die PCB (9) bildet.

2. Windschutzscheibenwischerantrieb oder -motor nach Anspruch 1, **dadurch gekennzeichnet, dass** der Zapfenteilabschnitt (17.3) einen sich in Richtung eines freien Endes des Zapfens verjüngenden Querschnitt aufweist.

3. Windschutzscheibenwischerantrieb oder -motor nach Anspruch 2, **dadurch gekennzeichnet, dass** der mindestens eine Zentrier- und Verriegelungszapfen (15) einen Außenquerschnitt aufweist, der an dem Querschnitt der entsprechenden Zentrier- und Verriegelungsöffnung (21) zumindest am Zapfenteilabschnitt (17.3) angepasst ist, wodurch eine Zentrierung der PCB (9) bewirkt wird, und/oder an einem nach dem Eingriff in der Zentrier- und Fixieröffnung (21) aufgenommenen Zapfenteilabschnitt (17.2).

4. Windschutzscheibenwischerantrieb oder -motor nach einem der vorhergehenden Ansprüche, **dadurch gekennzeichnet, dass** mindestens ein Zentrier- und Verriegelungszapfen (15) ein axial geschlitzter Zapfen mit mindestens einem Längsschlitz (18), vorzugsweise mit einem offenen Längsschlitz, der am freien Ende des Zapfens offen ist, ist.

5. Windschutzscheibenwischerantrieb oder -motor nach einem der vorhergehenden Ansprüche, **dadurch gekennzeichnet, dass** mindestens ein elektrisches Anschlusselement (11a, 11b) auf der Gehäuseseite am Gehäuseabschnitt (7) vorgesehen ist und mindestens ein elektrisches Anschlusselement (12) auf der PCB-Seite auf der PCB (9) vorgesehen ist und dass der mindestens eine Zentrier- und Verriegelungszapfen (15) mit dem Zentrierabschnitt (17.2, 17.3) so ausgeführt ist, dass es bei Einführen des Zentrier- und Verriegelungszapfens (15) in die Zentrier- und Verriegelungsöffnungen (21) zu einem Vorzentrieren der PCB (9) und/oder des mindestens einen Anschlusselements (12) auf der PCB-Seite bezüglich des mindestens einen Anschlusselements (11a, 11b) auf der Gehäuseseite und genauer vor Verbinden der Anschlusselemente (11a, 11b, 12) und vor Eingriff des Zentrier- und Verriegelungszapfens (15) in die Zentrier- und Verriegelungsöffnung (21) kommt.

6. Windschutzscheibenwischerantrieb oder -motor nach einem der vorhergehenden Ansprüche, **dadurch gekennzeichnet, dass** die mindestens eine Zentrier- und Verriegelungsöffnung (21) auf der PCB (9) vorgesehen ist.

7. Windschutzscheibenwischerantrieb oder -motor nach einem der vorhergehenden Ansprüche, **gekennzeichnet durch** mindestens drei Verriegelungszapfen (15), die vorzugsweise bezüglich einander räumlich versetzt angeordnet sind, derart, dass sie die Eckpunkte eines rechtwinkligen Dreiecks bilden.

8. Windschutzscheibenwischerantrieb oder -motor nach einem der vorhergehenden Ansprüche, **dadurch gekennzeichnet, dass** der Deckel (7) in seiner Mitte auf der Innenseite des Deckels einen vertieften Deckelbereich (7.1) und einen flanschartigen Deckelumfang (7.2), mit dem der Deckel (7) bei montiertem Hilfsantrieb in Kontakt mit einer Umfangswand (5.1) des Getriebegehäuses 5 abgedichtet ist.

## Revendications

1. Moteur ou système d'entraînement pour essuie-glace destiné à être utilisé dans des véhicules, comportant au moins un système électronique (8), logé à l'intérieur d'un élément d'engrenage (4), comportant une carte de circuits imprimés (9), le ou les systèmes électroniques (8) étant retenus sur le côté intérieur d'une section de carter qui est un couvercle (7) d'un carter d'élément d'engrenage (5) par au moins une goupille de centrage et de verrouillage (15) faisant saillie à partir d'une surface intérieure de la section de carter, le carter d'élément d'engrenage (5) étant en forme de coupe ou de bol et étant conçu pour recevoir une roue pour vis sans fin (6), **caractérisé en ce que**
le ou les systèmes électroniques (8), au moyen de la ou des goupilles de centrage et de verrouillage (15) s'étendant à travers une ouverture de centrage et de fixation (21), sont maintenus centrés à l'intérieur de l'élément d'engrenage, la ou les goupilles de centrage et de verrouillage (15) étant conçues sous la forme d'une pièce d'emboîtage élastique ou d'une goupille de retenue à des fins de mise en prise de la carte de circuits imprimés (9) sur cette goupille, la goupille de centrage et de verrouillage (15) respective étant fabriquée d'un seul tenant avec la section de carter de l'élément d'engrenage, dans le couvercle de carter (7), le couvercle (7) étant fabriqué d'un seul tenant sous la forme d'une pièce moulée en plastique,
la ou les goupilles de centrage et de verrouillage (15) présentent plusieurs sous-sections (17.1, 17.2, 17.3) adjacentes les unes aux autres dans la direction de l'axe de la goupille, une sous-section (17.1) adjacente à une base (16) de la goupille (15), une sous-section (17.2) suivant la sous-section (17.1) et une sous-section (17.3) suivant la sous-section (17.2), et deux contre-dépouilles (20) agissant comme des butées, formées au niveau de la transition entre la sous-section (17.2) et la sous-section (17.3), sur les côtés circonférentiels à courbure convexe de ces sous-sections (17.2, 17.3),
la ou les goupilles de centrage et de verrouillage (15) forment deux surfaces de contact axiales (19) pour la carte de circuits imprimés (9) au niveau de la transition entre la sous-section (17.1) et la sous-section (17.2).

2. Moteur ou système d'entraînement pour essuie-glace selon la revendication 1, **caractérisé en ce que** la sous-section de goupille (17.3) présente une section transversale s'effilant dans la direction d'une extrémité libre de la goupille.

3. Moteur ou système d'entraînement pour essuie-glace selon la revendication 2, **caractérisé en ce que** la ou les goupilles de centrage et de verrouillage (15) présentent une section transversale extérieure adaptée à la section transversale de l'ouverture de centrage et de verrouillage (21) correspondante au moins sur la sous-section de goupille (17.3) réalisant le centrage de la carte de circuits imprimés (9) et/ou sur une sous-section de goupille (17.2) reçue dans l'ouverture de centrage et de fixation (21) après la mise en prise.

4. Moteur ou système d'entraînement pour essuie-glace selon l'une des revendications précédentes, **caractérisé en ce que** la ou les goupilles de centrage et de verrouillage (15) sont des goupilles à fente axiale comportant au moins une fente allongée (18), de préférence comportant une fente allongée ouverte, ouverte au niveau de l'extrémité libre de la goupille.

5. Moteur ou système d'entraînement pour essuie-glace selon l'une des revendications précédentes, **caractérisé en ce qu'**au moins un élément de connexion électrique (11a, 11b) du côté du carter est placé sur la section de carter (7) et au moins un élément de connexion électrique (12) du côté de la carte de circuits imprimés est placé sur la carte de circuits imprimés (9) et **en ce que** la ou les goupilles de centrage et de verrouillage (15) sont conçues avec la section de centrage (17.2, 17.3) de telle sorte que, lors de l'insertion de la goupille de centrage et de verrouillage (15) dans les ouvertures de centrage et de verrouillage (21), un centrage préliminaire de la carte de circuits imprimés (9) et/ou du ou des éléments de connexion (12) du côté de la carte de circuits imprimés par rapport au(x) éléments de connexion (11a, 11b) du côté du carter s'effectue et, plus précisément, avant l'assemblage des éléments de connexion (11a, 11b, 12) et avant la mise en prise de la goupille de centrage et de verrouillage (15) dans l'ouverture de centrage et de verrouillage (21) .

6. Moteur ou système d'entraînement pour essuie-glace selon l'une des revendications précédentes, **caractérisé en ce que** la ou les ouvertures de centrage et de verrouillage (21) sont placées sur la carte de circuits imprimés (9).

7. Moteur ou système d'entraînement pour essuie-glace selon l'une des revendications précédentes, **caractérisé par** au moins trois goupilles de verrouillage (15), de préférence agencées de manière spatialement décalée les unes par rapport aux autres de telle sorte qu'elles forment les sommets d'un triangle rectangle.

8. Moteur ou système d'entraînement pour essuie-glace selon l'une des revendications précédentes, **caractérisé en ce que** le couvercle (7) forme une région de couvercle en renfoncement (7.1) dans son centre du côté intérieur du couvercle et une périphérie de couvercle semblable à une bride (7.2), avec laquelle le couvercle (7), avec le système d'entraînement auxiliaire assemblé, est placé en contact hermétique avec une paroi circonférentielle (5.1) du carter d'élément d'engrenage (5).
